# EUROPÄISCHE PATENTSCHRIFT

(11) **EP 0 436 871 B1**
(45) Veröffentlichungstag und Bekanntmachung des Hinweises auf die Patenterteilung: **08.02.1995**
(21) Anmeldenummer: 90124312.1
(22) Anmeldetag: 15.12.1990
(51) Int. Cl.: B29B 17/00, B29B 13/10, B29B 13/02

(54) **Verfahren Vorrichtung zur Wiederverwertung von Abfällen oder Altartikeln aus Kunststoff, insbesondere aus Polyurethan oder Polyharnstoff**
Method for plastic reclaiming, especially for polyurethane or polyuren
Procédé pour la recupération des déchets en plastique, spécialement déchets de polyuréthane ou polyurée

(30) Priorität: 10.01.1990 DE 4000472; 13.01.1990 DE 4000829; 19.06.1990 DE 4019460
(43) Veröffentlichungstag der Anmeldung: 17.07.1991
(73) Patentinhaber: PHOENIX AKTIENGESELLSCHAFT, 21079 Hamburg (DE)
(72) Erfinder: Schaper, Dr. Herbert, D-2000 Hamburg 13 (DE); Leitner, Horst, D-2100 Hamburg 90 (DE); Bendiks, Ernst, D-2110 Buchholz (DE)

(56) Entgegenhaltungen:
- DE-A- 3 717 609
- US-A- 3 263 010
- PATENT ABSTRACTS OF JAPAN, Band 9, No. 3 (M-349)[1726], 9. Januar 1985;& JP-A-59 155 019 (SANWA KAKOU K.K.) 04-09-1984

## Beschreibung

Die Erfindung betrifft ein Verfahren zur Wiederverwertung (Recycling-Verfahren) von Abfällen oder Altartikeln aus Kunststoff, insbesondere aus Polyurethan oder Polyharnstoff, unter Verwendung einer Vorrichtung, umfassend ein Formober- und ein Formunterteil sowie ein Formnest, wobei die Abfälle bzw. Altartikel als Rohstoff zerkleinert werden, beispielsweise zu Spänen oder Granulat, und zwar in einer Größe ≦ 5 mm, insbesondere ≦ 3 mm, und das Einbringen des zerkleinerten Rohstoffes in die Vorrichtung unter Einwirkung von Temperaturen Zwischen 170 und 240°C und unter Verpressen bei Drücken von > 300 bar, insbesondere > 500 bar, erfolgt.

Bei der massenweisen Herstellung von Kleinteilen aus Kunststoff (z.B. Schaltergehäuse) fällt bei der Herstellung ein nicht unerheblicher Teil an Kunststoffabfällen an, der einen wertvollen Rohstoff darstellt. Dieser Rohstoff wurde bisher als Abfall betrachtet und entweder als Müll deponiert oder verbrannt.

Aus der EP-A-0 248 239 ist ein Verfahren zum Herstellen von Formteilen aus thermoplastischen Kunststoffabfällen bekannt, bei der die Kunststoffabfälle im Walzenextruder auf einen Druck von bis zu etwa 140 bar gebracht werden, wobei die vor der Extuderdüse liegende Form mit den plastifizierten Kunststoffabfällen unter dem Druck des Extruders gefüllt wird. Ein Wiederverwertungs-Verfahren unter Druck 12 wird ferner in der US-A-3 263 010 beschrieben.

Auch bei der Herstellung von Artikeln aus Gummi (Elastomere) wie Dichtungsprofile, Krümmer-Schläuche usw. fallen beachtliche Abfallmengen an, wobei in der DE-A-37 19 291 und EP-A- 0 393 535 ein Verfahren zur Widerverwertung von Gummiabfällen beschrieben wird.

In zunehmendem Maße werden aber auch große Teile eines Kraftfahrzeuges, beispielsweise Stoßfänger, Seitenverkleidungen und Spoiler anstelle aus Metall aus Kunststoffen hergestellt, wobei Polyurethan-Integralschaum bzw. Polyurethan-RIM-Werkstoffen eine besondere Bedeutung zukommt. Diese Großteile aus Kunststoff im Kraftfahrzeugbereich, aber auch aus anderen Herstellungsbereichen anderer Gegenstände, stellen ein erhebliches Entsorgungsproblem dar (ADAC Motorwelt, Dezember 1990).

Aufgabe der Erfindung ist es daher; Abfälle wie auch Altartikel aus Kunststoff, insbesondere aus Polyurethan oder Polyharnstoff, aus umwelttechnologischen wie auch wirtschaftlichen Gesichtspunkten einer Wiederverwertung zuzuführen. Gelöst wird diese Aufgabe durch ein Verfahren gemäß Kennzeichen des Anspruchs 1 oder 2. Die erfindungswesentlichen Verfahrensstufen sind:

### Verfahrensstufe a

Zunächst werden die Abfälle bzw. Altartikel zerkleinert, beispielsweise zu Spänen oder Granulat, wobei die Größe des zerkleinerten Rohstoffes ≦ 5 mm, insbesondere ≦ 3 mm beträgt. Dabei sollte der untere Grenzwert 0,5 mm sein. Der zweckmäßige Größenbereich liegt bei 2 bis 3 mm.

Zwecks Entfernung eventuell störender Partikel wie Lackteile, Staub und Verstärkungsfasern (Glas- oder Kohlefasern) ist es zweckmäßig, wenn der zerkleinerte Rohstoff einem Trennverfahren durch Windsichten unterworfen wird.

### Verfahrensstufe b

Das Vorheizen wird bei einer Mindesttemperatur von 130°C durchgeführt, wobei die Mindestdauer 3 Minuten beträgt. Der zerkleinerte Rohstoff wird insbesondere mittels heißer Luft nach dem Wirbelstrom- oder nach dem Gegenstromverfahren erhitzt. Die Vorheizbedingungen sind dabei von der Größe des zerkleinerten Rohstoffes abhängig. Bei einer Größe von 2 bis 3 mm werden vorzugsweise folgende beiden Verfahrensvarianten herangezogen:
- Der Rohstoff wird etwa 7 Minuten lang bei etwa 200°C vorgeheizt (mit oder ohne Anwendung des Verfahrens gemäß Anspruch 7).
- Der Rohstoff wird etwa 8 Minuten lang bei etwa 150°C mittels heißer Luft nach dem Wirbelstrom- oder Gegenstromverfahren vorgeheizt.

### Verfahrensstufe c

Der zerkleinerte und vorgeheizte Rohstoff wird bei einer Einpreßgeschwindigkeit von 0,03 bis 0,5 m/sec, zweckmäßigerweise bei 0,3 m/sec, unter Einwirkung von Temperaturen zwischen 170 und 240°C, zweckmäßigerweise bei Temperaturen von 180 bis 200°C, und Drücken von > 300 bar, insbesondere > 500 bar, in eine Artikelform gebracht. Sehr häufig sind dabei Drücke von 750 bis 2000 bar erforderlich.

Zwei Vorrichtungsvarianten zur Durchführung des erfindungsgemäßen Verfahrens werden unter Bezugnahme auf zwei schematische Zeichungen nun näher beschrieben. Es zeigen:
- Fig. 1: Vorrichtung mit Kolbenkammer;
- Fig. 2: Vorrichtung mit Tauchkanten.

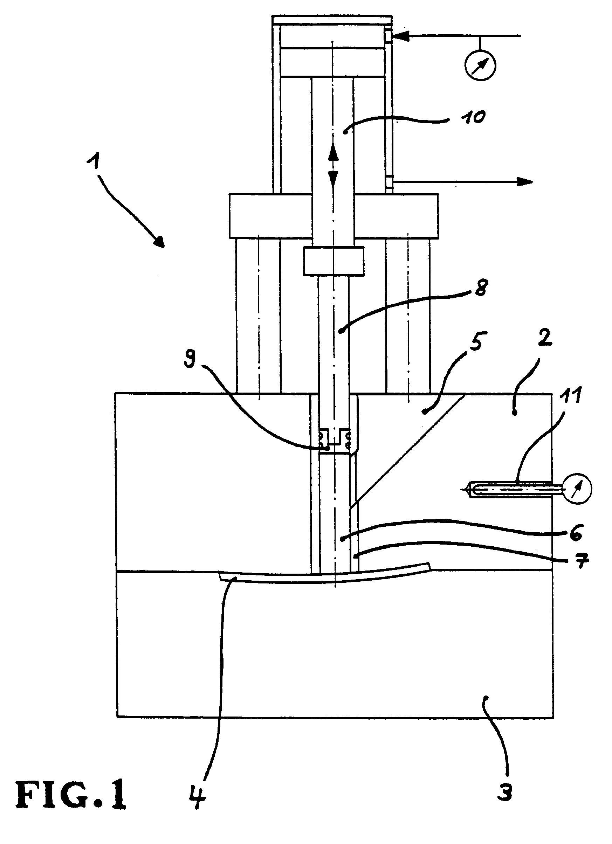

Nach Fig. 1 besteht die Vorrichtung (1) aus einem Formober(2)- und einem Formunterteil (3) sowie einem Formnest (4), wobei das Formoberteil (2) eine Beschickungsöffnung (5) für den zerkleinerten und vorgeheizten Rohstoff aufweist, die in eine zylindrische Kolbenkammer (6) mündet, wobei die Kolbenkammer als Vorraum zum Formnest (4) den Rohstoff aufnimmt, der mittels eines Kolbens (8) in das Formnest (4) gepreßt wird.

Die Kolbenkammer (6) ist zweckmäßigerweise als Kolbenbuchse (7) aus hochwertigem, stahlgehärtetem Werkstoff ausgebildet, wobei der Durchmesser der Kolbenkammer bzw. der Kolbenbuchse etwa 35 mm beträgt. Vorzugsweise weist der Kolben (8) an seiner Stirnfläche eine Manschette (9) aus hochwertigem Werkstoff, insbesondere aus einer Eisen-Bronze-Legierung, auf. Weitere Vorrichtungsteile sind der Druckübersetzer (10) und die Einrichtung (11) zur Temperaturmessung.

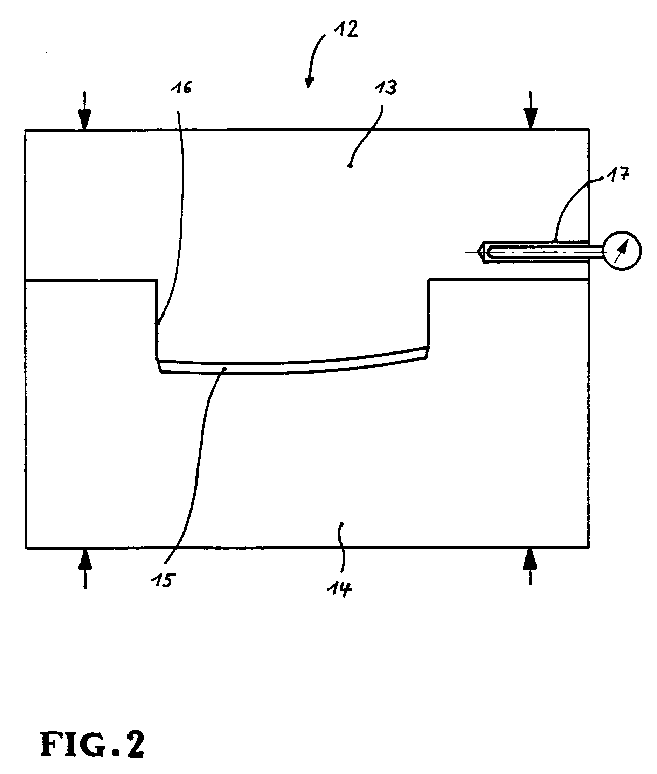

Nach Fig. 2 besteht die Vorrichtung (12) ebenfalls aus einem Formober(13)- und Formunterteil (14) sowie einem Formnest (15). Das Formober- und Formunterteil ist mit senkrechten Tauchkanten (16) ausgestattet. Der zerkleinerte und vorgeheizte Rohstoff wird bei geöffneter Form in das Formnest (15) gebracht. Anschließend wird die Form geschlossen, wobei der Rohstoff unter Scherbeanspruchung verpreßt wird. Die Einpreßkraft mittels eines Druckübersetzers wirkt hier sowohl auf das Formober- als auch auf das Formunterteil in Pfeilrichtung. Ein weiteres Vorrichtungsteil ist die Einrichtung (17) zur Temperaturmessung.

Bei beiden Vorrichtungen wird das Formober(2, 13)- und Formunterteil (3, 14) mittels einer Heizeinrichtung aufgeheizt. Dabei sollte die Temperatur des Formober- und Formunterteils gleich sein. Diese Formentemperaturen bildenzugleich die Arbeitstemperaturen (170 bis 240°C).

Nach dem erfindungsgemäßen Verfahren, werden aus Abfällen oder Altarkikeln aus Kunststoff insbesondere folgende Artikel hergestellt:
- Kfz-Teile im Nichtsichtbereich, z.B. Steinschlag-Schutz-Abdeckungen, Schmutzabweiser, Kotflügelauskleidungen, Handschuhkästen, Deckel für Sicherungskästen, Fußstützen, Luftleitteile, Fußraumabdeckungen, Rücklichtverkleidungen, Deckel für Karosserieabdeckungen, Verkleidung für die Zentralelektrik, Wasserablauf, Reserveradabdeckung usw.;
- Teile im Nichtsichtbereich innerhalb des Maschinensektors;
- Teile im Sichtbereich innerhalb des Kfz- und Maschinersektors bei entsprechend strukturierter Lackierung.

* des zerkleinerten Rohstoffes

## Patentansprüche

1. Verfahren zur Wiederverwertung von Abfällen oder Altartikeln aus Kunststoff, insbesondere aus Polyurethan oder Polyharnstoff, unter Verwendung einer Vorrichtung (1), umfassend ein Formober (2)- und ein Formunterteil (3) sowie ein Formnest (4), wobei die Abfälle bzw. Altartikel als Rohstoff zerkleinert werden, beispielsweise zu Spänan oder Granulat, und zwar in einer Größe ≦ 5 mm, insbesondere ≦ 3 mm, und das Einbringen* in die Vorrichtung unter Einwirkung von Temperaturen zwischen 170 und 240°C und unter Verpressen bei Drücken von > 300 bar, insbesondere > 500 bar, erfolgt, dadurch gekennzeichnet, daß der zerkleinerte Rohstoff mindesten 3 Minuten lang bei einer Mindesttemperatur von 130°C vorgeheizt und danach über eine Beschickungsöffnung (5) des Formoberteils (2) in wenigstens eine zylindrische Kolbenkammer (6) als Vorraum zum Formnest (4) gebracht wird, wobei dann der zerkleinerte und vorgeheizte Rohstoff mittels eines Kolbens (8) bei einer Einpreßgeschwindigkeit von 0,03 bis 0,5 m/sec in das Formnest (4) gepreßt wird.

2. Verfahren zur Wiederverwertung von Abfällen oder Altartikeln aus Kunststoff, insbesondere aus Polyurethan oder Polyharnstoff, unter Verwendung einer Vorrichtung (12), umfassend ein Formober (13)- und ein Formunterteil (14) sowie ein Formnest (15), wobei die Abfälle bzw. Altartikel als Rohstoff zerkleinert werden, beispielsweise zu Spänen oder Granulat, und zwar in einer Größe ≦ 5 mm, insbesondere ≦ 3 mm, und das Einbringen des zerkleinerten Rohstoffes in die Vorrichtung unter Einwirkung von Temperaturen zwischen 170 und 240°C und unter Verpressen bei Drücken von > 300 bar, insbesondere > 500 bar, erfolgt, dadurch gekennzeichnet, daß der zerkleinerte Rohstoff mindestens 3 Minuten lang bei einer Mindesttemperatur von 130°C vorgeheizt und danach bei geöffneter Form in das Formnest (15) gebracht und anschließend bei geschlossener Form, wobei das Formober (13)- und Formunterteil (14) mit senkrechten Tauchkanten (16) ausgestattet ist, unter Scherbeanspruchung bei einer Einpreßgeschwindigkeit von 0,03 bis 0,5 m/sec verpreßt wird.

3. Verfahren nach Anspruch 1 oder 2, dadurch gekennzeichnet, daß die Mindestgröße des zerkleinerten Rohstoffes 0,5 mm beträgt.

4. Verfahren nach einem der Ansprüche 1 bis 3, dadurch gekennzeichnet, daß die Größe des zerkleinerten Rohstoffes 2 bis 3 mm beträgt.

5. Verfahren nach einem der Ansprüche 1 bis 4, dadurch gekennzeichnet, daß der zerkleinerte Rohstoff zwecks Entfernung eventuell störender Partikel (z.B. Lackteile, Staub, Verstärkungsfasern) einem Trennverfahren durch Windsichten unterworfen wird.

6. Verfahren nach Anspruch 3, dadurch gekennzeichnet, daß das Vorheiden des zerkleinerten Rohstoffes (2 bis 3 mm) etwa 7 Minuten lang bei etwa 200°C erfolgt.

7. Verfahren nach einem der Ansprüche 1 bis 6, dadurch gekennzeichnet, daß der zerkleinerte Rohstoff mittels heißer Luft nach dem Wirbelstrom- oder Gegenstromverfahren vorgeheizt wird.

8. Verfahren nach den Ansprüchen 3 und 7, dadurch gekennzeichnet, daß das Vorheizen des zerkleinerten Rohstoffes (2 bis 3 mm) etwa 8 Minuten lang bei etwa 150°C (Wirbelstrom- oder Gegenstromverfahren) erfolgt.

9. Verfahren nach einem der Ansprüche 1 bis 8, dadurch gekennzeichnet, daß die Einpreßgeschwindigkeit etwa 0,3 m/sec beträgt.

10. Verfahren nach einem der Ansprüche 1 bis 9, dadurch gekennzeichnet, daß das Einpressen bei einer Temperatur von 180 bis 200°C erfolgt.

11. Verfahren nach einem der Ansprüche 1 bis 10, dadurch gekennzeichnet, daß das Einpressen bei Drücken von 750 bis 2000 bar erfolgt.

12. Verfahren nach Anspruch 1, dadurch gekennzeichnet, daß eine Kolbenkammer (6) verwendet wird, die als Kolbenbuchse (7) aus hochwertigem Werkstoff ausgebildet ist.

13. Verfahren nach Anspruch 12, dadurch gekennzeichnet, daß eine Kolbenbuchse (7) verwendet wird, die stahlgehärtet ist.

14. Verfahren nach Anspruch 1, 12 oder 13, dadurch gekennzeichnet, daß eine Kolbenkammer (6) bzw. Kolbenbuchse (7) verwendet wird, deren Durchmesser etwa 35 mm beträgt.

15. Verfahren nach Anspruch 1, 12, 13 oder 14, dadurch gekennzeichnet, daß ein Kolben (8) verwendet wird, der an seiner Stirnfläche eine Manschette (9) aus hochwertigem Werkstoff aufweist.

16. Verfahren nach Anspruch 15, dadurch gekennzeichnet, daß eine Manschette (9) verwendet wird, die aus einer Eisen-Bronze-Legierung besteht.

17. Verfahren nach einem der Ansprüche 1 bis 16, dadurch gekennzeichnet, daß das Formober (2, 13)- und Formunterteil (3, 14) and eine Heizeinrichtung angeschlossen wird, wobei die Formentemperaturen die Arbeitstemperaturen (170 bis 240°C) bilden.

18. Verfahren nach Anspruch 17, dadurch gekennzeichnet, daß die Temperaturen des Formober(2, 13)- und Formunterteils (3, 14) gleich sind.

## Claims

1. A method of recycling waste or scrap articles of plastics, especially of polyurethane or polyurea, by the employment of a device (1) which comprises a mould with an upper part (2) and a lower part (3) as well as a cavity (4), whilst as raw material the waste or scrap articles are comminuted, for example, into chips or granules of a size, say, of ≦ 5 mm, especially ≦ 3 mm, and the charging of the comminuted raw material into the device is effected under the influence of temperatures between 170 and 240°C and under compression at pressures of > 300 bar, especially > 500 bar, characterized in that the comminuted raw material is preheated for at least 3 minutes at a minimum temperature of 130°C and after that is brought via a charging opening (5) in the upper part (2) of the mould into at least one cylindrical piston chamber (6) as antechamber to the mould cavity (4), and then the comminuted and preheated raw material is pressed into the mould cavity (4) by means of a piston (8) at a rate of injection of 0.03 to 0.5 m/sec.

2. A method of recycling waste or scrap articles of plastics, especially of polyurethane or polyurea, by the employment of a device (1) which comprises a mould with an upper part (2) and a lower part (3) as well as a cavity (4), whilst as raw material the waste or scrap articles are comminuted, for example, into chips or granules of a size, say, of ≦ 5 mm, especially ≦ 3 mm, and the charging of the comminuted raw material into the device is effected under the influence of temperatures between 170 and 240°C and under compression at pressures of > 300 bar, especially > 500 bar, characterized in that the comminuted raw material is preheated for at least 3 minutes at a minimum temperature of 130°C and after that with the mould opened is brought into the mould cavity (15) and subsequently with the mould closed, the upper part (13) and lower part (14) of the mould being equipped with vertical plunger edges (16), is compressed with shearing stress at a rate of injection of 0.03 to 0.5 m/sec.

3. A method as in Claim 1 or 2, characterized in that the minimum size of the comminuted raw material amounts to 0.5 mm.

4. A method as in one of the Claims 1 to 3, characterized in that size of the comminuted raw material amounts to 2 to 3 mm.

5. A method as in one of the Claims 1 to 4, characterized in that for the purpose of removal of possibly troublesome particles (e.g., fragments of varnish, dust, reinforcing fibres) the comminuted raw material is subjected to a method of separation by air sifting.

6. A method as in Claim 3, characterized in that the preheating of the comminuted raw material (2 to 3 mm) is effected for about 7 minutes at about 200°C.

7. A method as in one of the Claims 1 to 4, characterized in that the comminuted raw material is preheated by means of hot air according to the turbulent or contraflow method.

8. A method as in Claims 3 and 7, characterized in that the preheating of the comminuted raw material (2 to 3 mm) is effected for about 8 minutes at about 150°C (turbulent or contraflow method).

9. A method as in one of the Claims 1 to 8, characterized in that the rate of injection amounts to about 0.3 m/sec.

10. A method as in one of the Claims 1 to 9, characterized in that the injection is effected at a temperature of from 180 to 200°C.

11. A method as in one of the Claims 1 to 10, characterized in that the injection is effected at pressures of from 750 to 2000 bar.

12. A method as in Claim 1, characterized in that a piston chamber (6) is employed which is made as a piston bush (7) of high-grade material.

13. A method as in Claim 12, characterized in that a piston bush (7) is employed which is steel-hardened.

14. A method as in Claim 1, 12 or 13, characterized in that a piston chamber (6) or piston bush (7) is employed, the diameter of which amounts to about 35 mm.

15. A method as in Claim 1, 12, 13 or 14, characterized in that a piston (8) is employed which exhibits on its endface a collar (9) of high-grade material.

16. A method as in Claim 15, characterized in that a collar (9) is employed which consists of an iron-bronze alloy.

17. A method as in one of the Claims 1 to 16, characterized in that the upper part (2, 13) and lower part (3, 14) of the mould are connected to a heating equipment so that the mould temperatures form the working temperatures (170 to 240°C).

18. A method as in Claim 17, characterized in that the temperatures of the upper part (2, 13) of the mould and of the lower part (3, 14) are equal.

## Revendications

1. Procédé pour le recyclage de déchets ou d'articles usagés en matière plastique, en particulier en polyuréthanne ou en polycarbamide, avec utilisation d'un dispositif (1) qui comprend une partie supérieure (2) et une partie inférieure (3) de moule ainsi qu'une cavité de moulage (4), les déchets ou articles usagés étant fragmentés pour servir de matière première, par exemple en copeaux ou en granulé d'une taille ≦ 5 mm, en particulier ≦ 3 mm, et l'introduction de la matière première fragmentée dans le dispositif, s'effectuant sous l'action de températures comprises entre 170 et 240°C et avec compression à des pressions > 300 bar, en particulier > 500 bar, caractérisé en ce que la matière première fragmentée est préchauffee pendant au moins 3 mn à une température de 130°C au minimum, puis est envoyée, par une ouverture de chargement (5) de la partie supérieure (2) du moule, dans au moins une chambre de piston cylindrique (6) constituant l'antichambre de la cavité de moulage (4), la matière première fragmentée et préchauffée étant ensuite pressée dans la cavité de moulage (4) au moyen d'un piston (8) à une vitesse de pressage de 0,03 à 0,5 m/s.

2. Procédé pour le recyclage de déchets ou d'articles usagés en matière plastique, en particulier en polyuréthanne ou en polycarbamide, avec utilisation d'un dispositif (12) qui comprend une partie supérieure (13) et une partie inférieure (14) de moule ainsi qu'une cavité de moulage (15), les déchets ou articles usagés étant fragmentés pour servir de matière première, par exemple en copeaux ou en granulé d'une taille ≦ 5 mm, en particulier ≦ 3 mm, et l'introduction de la matière première fragmentée dans le dispositif s'effectuant sous l'action de températures comprises entre 170 et 240°C et avec compression à des pressions > 300 bar, en particulier > 500 bar, caractérisé en ce que la matière première fragmentée est préchauffée pendant au moins 3 mn à une température de 130°C au minimum, puis elle est envoyée dans la cavité de moulage (15) tandis que le moule est ouvert, et, après la fermeture du moule dont la partie supérieure (13) et la partie inférieure (14) sont réalisées avec des faces plongeantes verticales (16), elle est ensuite pressée sous contrainte de cisaillement à une vitesse de pressage de 0,03 à 0,5 m/s.

3. Procédé selon la revendication 1 ou 2, caractérisé en ce que la grosseur minimale de la matière première fragmentée s'élève à 0,5 mm.

4. Procédé selon l'une quelconque des revendications 1 à 3, caractérisé en ce que la grosseur de la matière première fragmentée est comprise entre 2 et 3 mm.

5. Procédé selon l'une quelconque des revendications 1 à 4, caractérisé en ce qu'en vue de l'élimination de particules éventuellement contaminantes (par exemple d'éclats de vernis, de poussière, de fibres de renforcement), la matière première fragmentée est soumise à un traitement de séparation par criblage à l'air.

6. Procédé selon la revendication 3, caractérisé en ce que le préchauffage de la matière première fragmentée (de 2 à 3 mm) est effectué pendant 7 mn environ à 200°C environ.

7. Procédé selon l'une quelconque des revendications 1 à 6, caractérisé en ce que la matière première fragmentée est préchauffée au moyen d'air chaud par le procédé à écoulement tourbillonnaire ou à contre-courant.

8. Procédé selon les revendications 3 et 7, caractérisé en ce que le préchauffage de la matière première fragmentée (de 2 à 3 mm) est effectué pendant 8 mn environ à 150°C environ (par le procédé à écoulement tourbillonnaire ou à contre-courant).

9. Procédé selon l'une quelconque des revendications 1 à 8, caractérisé en ce que la vitesse de pressage s'élève à 0,3 m/s environ.

10. Procédé selon l'une quelconque des revendications 1 à 9, caractérisé en ce que le pressage est effectué à une température de 180 à 200°C.

11. Procédé selon l'une quelconque des revendications 1 à 10, caractérisé en ce que le pressage est effectué sous des pressions de 750 à 2000 bar.

12. Procédé selon la revendication 1, caractérisé en ce qu'on utilise une chambre de piston (6) qui est réalisée sous forme de chemise de piston (7) en un matériau de haute qualité.

13. Procédé selon la revendication 12, caractérisé en ce qu'on utilise une chemise de piston (7) qui est en acier trempé,

14. Procédé selon l'une quelconque des revendications 1, 12 et 13, caractérisé en ce qu'on utilise une chambre de piston (6) ou une chemise de piston (7) dont le diamètre s'élève à 35 mm environ.

15. Procédé selon l'une quelconque des revendications 1, 12, 13 et 14, caractérisé en ce qu'on utilise un piston (8) qui présente, sur sa face d'extrémité, une rondelle (9) en un matériau de haute qualité.

16. Procédé selon la revendication 15, caractérisé en ce qu'on utilise une rondelle (9) qui est en un alliage de fer-bronze.

17. Procédé selon l'une quelconque des revendications 1 à 16, caractérisé en ce que la partie supérieure (2, 13) et la partie inférieure (3, 14) du moule sont reliées à une installation de chauffage, les températures du moule constituant les températures de travail (170 à 240°C).

18. Procédé selon la revendication 17, caractérisé en ce que les températures de la partie supérieure (2, 13) et de la partie inférieure (3, 14) du moule sont égales.
